# EUROPEAN PATENT APPLICATION

(11) **EP 4 592 832 A1**
(43) Date of publication of application: **30.07.2025**
(21) Application number: 24196977.3
(22) Date of filing: 28.08.2024
(51) Int. Cl.: G06F 9/4401, G06F 9/445

(54) **METHOD AND APPARATUS FOR CONTROLLING CHIP, CHIP, ELECTRONIC DEVICE, AND STORAGE MEDIUM**

(30) Priority: 25.01.2024 CN 202410110752
(71) Applicant: Shanghai X-Ring Technology Co., Ltd., Shanghai 201206 (CN)
(72) Inventor: CHEN, Lele, Shanghai, 201206 (CN); WANG, Xianjin, Shanghai, 201206 (CN); SHI, Yuhua, Shanghai, 201206 (CN)
(74) Representative: Stöckeler, Ferdinand

(57) **Abstract**

A method for controlling a chip includes: reading a first target code from the ROM of the chip, identifying whether the first target code is an exception code, and in response to the first target code being the exception code, not executing the first target code, reading a second target code from a set storage space of the chip, and executing the second target code.

## Description

### TECHNICAL FIELD

The invention relates to the field of chip technologies, and in particularly to a method and an apparatus for controlling a chip, a chip, an electronic device, and a storage medium.

### BACKGROUND

At present, a Read-Only Memory (ROM) has advantages of fast speed, simple structure, low power consumption and the like, and is widely applied to electronic devices such as chips. For example, the ROM is used for storing codes that do not need to be changed. However, if a code in the ROM is abnormal, the chip may not run normally.

### SUMMARY

The invention provides a method and an apparatus for controlling a chip, a chip, an electronic device, a computer-readable storage medium, and a computer program product, to at least solve a problem existing in the related art that if a code in a Read-Only Memory (ROM) is an exception code, resulting in that the chip may not operate normally. The technical solution of the invention is as follows.

According to a first aspect of embodiments of the invention, a method for controlling a chip is provided. The method includes: reading a first target code from a Read-Only Memory (ROM) of the chip; identifying whether the first target code is an exception code; in response to the first target code being the exception code, withholding from executing the first target code; reading a second target code from a set storage space of the chip, and executing the second target code.

In an embodiment of the invention, identifying whether the first target code is the exception code includes: obtaining a code library, in which each code in the code library is marked as the exception code; identifying whether the first target code exists in the code library; in response to identifying that the first target code exists in the code library, identifying the first target code as the exception code; and in response to identifying that the first target code does not exist in the code library, identifying the first target code as a non-exception code.

In an embodiment of the invention, the method further includes: obtaining a mapping relationship between identifiers of first candidate codes and identifiers of second candidate codes; obtaining an identifier of the first target code; and determining the second target code from a plurality of second candidate codes based on the identifier of the first target code and the mapping relationship.

In an embodiment of the invention, reading the second target code from the set storage space of the chip includes: reading the second target code from a first storage space of the chip, in which the first storage space is a storage space of non-executable codes; storing the read second target code in a second storage space of the chip, in which the second storage space is a storage space of executable codes; and reading the second target code from the second storage space.

In an embodiment of the invention, the method further includes: determining the second storage space based on the second target code.

In an embodiment of the invention, the method further includes: in response to a storage capacity occupied by the second target code being less than or equal to a set threshold, determining that the second target code is a first type of code; and in response to the storage capacity occupied by the second target code being greater than the set threshold, determining that the second target code is a second type of code.

In an embodiment of the invention, determining the second storage space based on the second target code includes: in response to the second target code being the first type of code, using a third storage space as the second storage space; and in response to the second target code being the second type of code, using a fourth storage space as the second storage space; in which a storage capacity of the third storage space is less than a storage capacity of the fourth storage space.

In an embodiment of the invention, in response to the second target code being the second type of code, before reading the second type of code from the fourth storage space, the method further includes: reading a third target code from the first storage space, in which the third target code is used for instructing to read the second type of code from the fourth storage space; storing the read third target code in the third storage space; reading the third target code from the third storage space, and executing the third target code.

In an embodiment of the invention, the method further includes: in response to the first target code being a non-exception code, executing the first target code.

According to a second aspect of embodiments of the invention, an apparatus for controlling a chip is provided. The apparatus includes: a reading module, configured to read a first target code from a Read-Only Memory (ROM) of the chip; an identifying module, configured to identify whether the first target code is an exception code; a processing module, configured to: in response to the first target code being the exception code, withhold from executing the first target code; in which the processing module is further configured to read a second target code from a set storage space of the chip, and execute the second target code.

In an embodiment of the invention, the identifying module is further configured to: obtain a code library, in which each code in the code library is marked as the exception code; identify whether the first target code exists in the code library; in response to identifying that the first target code exists in the code library, identify the first target code as the exception code; and in response to identifying that the first target code does not exist in the code library, identify the first target code as a non-exception code.

In an embodiment of the invention, the processing module is further configured to: obtain a mapping relationship between identifiers of first candidate codes and identifiers of second candidate codes; obtain an identifier of the first target code; and determine the second target code from a plurality of second candidate codes based on the identifier of the first target code and the mapping relationship.

In an embodiment of the invention, the processing module is further configured to: read the second target code from a first storage space of the chip, in which the first storage space is a storage space of non-executable codes; store the read second target code in a second storage space of the chip, in which the second storage space is a storage space of executable codes; and read the second target code from the second storage space.

In an embodiment of the invention, the processing module is further configured to: determine the second storage space based on the second target code.

In an embodiment of the invention, the processing module is further configured to: in response to a storage capacity occupied by the second target code being less than or equal to a set threshold, determine that the second target code is a first type of code; and in response to the storage capacity occupied by the second target code being greater than the set threshold, determine that the second target code is a second type of code.

In an embodiment of the invention, the processing module is further configured to: in response to the second target code being the first type of code, use a third storage space as the second storage space; and in response to the second target code being the second type of code, use a fourth storage space as the second storage space; in which a storage capacity of the third storage space is less than a storage capacity of the fourth storage space.

In an embodiment of the invention, in response to the second target code being the second type of code, before reading the second type of code from the fourth storage space, the processing module is further configured to: read a third target code from the first storage space, in which the third target code is used for instructing to read the second type of code from the fourth storage space; store the read third target code in the third storage space; read the third target code from the third storage space, and execute the third target code.

In an embodiment of the invention, the processing module is further configured to: in response to the first target code being a non-exception code, execute the first target code.

According to a third aspect of embodiments of the invention, a chip is provided. The chip includes: a central processing unit (CPU), a Read-Only Memory (ROM), and a set storage space, in which the CPU is configured to implement steps of the method according to the first aspect of embodiments of the invention.

In an embodiment of the invention, the set storage space includes: a first storage space, in which the first storage space is a storage space of non-executable codes; and a second storage space, in which the second storage space is a storage space of executable codes.

In an embodiment of the invention, the first storage space includes a one-time programmable memory.

In an embodiment of the invention, the second storage space includes a third storage space and a fourth storage space, in which a storage capacity of the third storage space is less than a storage capacity of the fourth storage space.

In an embodiment of the invention, the fourth storage space includes a Random Access Memory (RAM).

According to a fourth aspect of embodiments of the invention, an electronic device is provided. The electronic device includes a processor; and a memory configured to store processor-executable instructions, in which the processor is configured to execute the processor-executable instructions to implement steps of the method according to the first aspect of embodiments of the invention.

According to a fifth aspect of embodiments of the invention, a computer-readable storage medium having computer program instructions stored thereon is provided, in which the program instructions, when executed by a processor, perform the steps of the method according to the first aspect of embodiments of the invention.

According to a sixth aspect of embodiments of the invention, a computer program product is provided. The computer program product includes a computer program, in which the computer program, when executed by a processor of an electronic device, performs steps of the method according to the first aspect of embodiments of the invention.

The technical solutions according to embodiments of the invention at least bring the following beneficial effects: when the first target code read from the ROM of the chip is the exception code, the first target code is not executed, and it continuously read the second target code from the set storage space of the chip and executes the second target code. A problem that an abnormal operation of the chip caused by executing the first target code that is the exception code may be avoided, and a normal operation of the chip is guaranteed. Compared to the related art where the high cost and the long time consumption are caused since it requires to re-tape out the chip when the ROM of the chip includes the exception code, the solution of the invention does not need to re-tape out the chip, and thus has advantages of low cost and short time consumption.

It is understandable that both the foregoing general description and the following detailed description are only explanatory and do not limit the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention and do not constitute an improper limitation on the invention.
FIG. 1 is a flowchart illustrating a method for controlling a chip according to an embodiment.
FIG. 2 is a flowchart illustrating a method for controlling a chip according to another embodiment.
FIG. 3 is a flowchart illustrating a method for controlling a chip according to another embodiment.
FIG. 4 is a flowchart illustrating a method for controlling a chip according to another embodiment.
FIG. 5 is a block diagram illustrating an apparatus for controlling a chip according to an embodiment.
FIG. 6 is a block diagram illustrating a chip according to an embodiment.
FIG. 7 is a block diagram illustrating a chip according to another embodiment.
FIG. 8 is a block diagram illustrating an electronic device according to an embodiment.

### DETAILED DESCRIPTION

In order to enable those of ordinary skill in the art to better understand technical solutions of the invention, the technical solutions in embodiments of the invention are clearly and completely described below with reference to the accompanying drawings.

It is noteworthy that the terms "first", "second", and the like in the specification, claims, and accompanying drawings of the invention are used to distinguish similar objects, and are not necessarily used to describe a specific order or sequence. It should be understood that data used in this way can be interchanged under appropriate circumstances, so that embodiments of the invention described herein can be implemented in an order other than those illustrated or described herein. The implementations described in the following embodiments do not represent all possible implementations consistent with the invention. Instead, they are merely examples of apparatuses and methods consistent with some aspects of the invention as detailed in the appended claims.

In the technical solutions of the invention, data acquisition, storage, use, processing, and the like all meet the provisions of relevant laws and regulations.

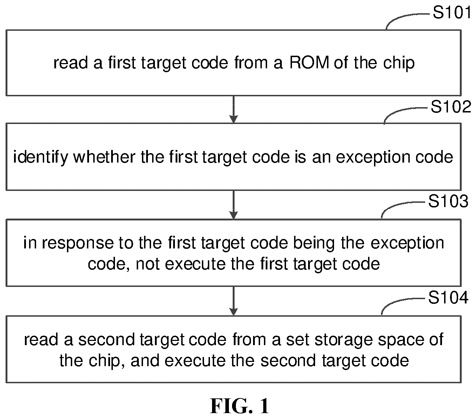

FIG. 1 is a flowchart illustrating a method for controlling a chip according to an embodiment. As illustrated in FIG. 1, the method for controlling a chip according to embodiments of the invention includes the following.

At S101, a first target code is read from a Read-Only Memory (ROM) of the chip.

It is noteworthy that an execution body of the method for controlling a chip according to embodiments of the invention is an electronic device. The electronic device includes a chip, a mobile phone, a notebook, a desktop computer, a vehicle-mounted terminal, a smart appliance, a wearable device, or the like. The wearable device may include a wrist-worn device (for example, a smart watch or a smart bracelet), a head-mounted device, a foot wearable device, or the like. The method for controlling a chip according to embodiments of the invention may be executed by an apparatus for controlling a chip according to embodiments of the invention. The apparatus for controlling a chip according to embodiments of the invention may be configured in any electronic device to perform the method for controlling a chip according to embodiments of the invention.

It is noteworthy that the chip includes an ROM. The ROM may be any ROM in the related art, including for example a Mask ROM, a Programmable ROM (PROM), or the like, which is not limited herein. The ROM includes codes stored thereon. A code is a symbolic arrangement of statements or instructions in a computer program, or a set of instructions in such a program. The first target code is part or all of the codes included in the ROM. The first target code means a code to be read in the ROM at present. The number of first target codes and the adopted programming language are not limited herein. For example, the first target code may be at least one piece (or line) of code, a code block, or the like. The first target code may be written in C language, C++, Java or other programming languages.

In an implementation, reading the first target code from the ROM of the chip includes obtaining a storage position of the first target code in the ROM, and reading the first target code on the storage position of the first target code in the ROM.

In some examples, obtaining the storage position of the first target code in the ROM includes obtaining a mapping relationship between identifiers of codes in the ROM and storage positions of codes in the ROM, obtaining an identifier of the first target code, and determining the storage position of the first target code in the ROM based on the identifier of the first target code and the mapping relationship. For example, a storage position having the mapping relationship with the identifier of the first target code may be used as the storage position of the first target code in the ROM. It is noteworthy that the identifier of the code is not limited, which may be for example a name of the code, a serial number of the code, or the like.

In some examples, obtaining the storage position of the first target code in the ROM includes obtaining a storage position of a third target code that is read from the ROM of the chip last time in the ROM, and taking a next storage position of the storage position of the third target code in the ROM as the storage position of the first target code in the ROM. In other words, obtaining the storage position of the first target code in the ROM includes: obtaining a storage position of a previous first target code that is read from the ROM of the chip last time in the ROM, and taking a next storage position of the storage position of the previous first target code in the ROM as the storage position of the current first target code in the ROM. If any code has never been read from the ROM, the initial position of the ROM is used as the storage position of the first target code in the ROM.

At S 102, it is identified whether the first target code is an exception code.

It is noteworthy that identifying whether the first target code is the exception code may be implemented by using any method for detecting the exception code in the related art, which is not limited herein.

In an implementation, identifying whether the first target code is the exception code includes identifying whether the first target code includes a set keyword; identifying that the first target code is the exception code in response to identifying the set keyword from the first target code; and identifying that the first target code is a non-exception code in response to determining that the first target code does not include the set keyword. It is noteworthy that the set keyword is not limited.

In an implementation, identifying whether the first target code is the exception code includes inputting the first target code into a target model, and identifying by the target model whether the first target code is the exception code. For example, the target model may output an identifying result of the first target code, and the identifying result is used to indicate whether the first target code is the exception code. The identifying result is not limited, which may include for example an exception reason of the first target code, exception content in the first target code, or the like.

In an implementation, identifying whether the first target code is the exception code includes obtaining a code library, in which each code in the code library is marked as the exception code; identifying whether the first target code exists in the code library; in response to identifying that the first target code exists in the code library, identifying the first target code as the exception code; and in response to identifying that the first target code does not exist in the code library, identifying the first target code as the non-exception code. Therefore, by setting the code library where each code is marked as the exception code in advance and by identifying whether the first target code exists in the code library, it may be identified whether the first target code is the exception code.

In some examples, obtaining the code library includes reading a fourth target code from the ROM of the chip, performing a test on the fourth target code, marking the fourth target code as the exception code in response to determining that the fourth target code does not pass the test, and adding the fourth target code into the code library. In another example, the code library may be established in advance, and establishing the code library includes reading a fourth target code from the ROM of the chip, performing a test on the fourth target code, marking the fourth target code as the exception code in response to determining that the fourth target code does not pass the test, and adding the fourth target code that is marked as the exception code into the code library. It is noteworthy that the fourth target code is part or all of the codes in the ROM, and the fourth target code refers to a code to be tested currently in the ROM. As an example, the codes included in the ROM each is used as the fourth target code, these fourth target codes are tested in turn, and the fourth target code(s) that is/are marked as the exception code form the code library. The fourth target code may be tested using any code testing method in the related art, which is not limited herein.

In some examples, before reading the fourth target code from the ROM of the chip, the method further includes identifying an end of a tape-out process of the chip. Therefore, in the method, after the tape-out process of the chip ends, the codes in the ROM of the chip may be tested to establish the code library for identifying whether the ROM includes the exception code.

At S 103, in response to the first target code being the exception code, the first target code is not executed.

At S 104, a second target code is read from a set storage space of the chip, and the second target code is executed.

It is noteworthy that the chip includes the set storage space and the set storage space stores codes. The second target code is part or all of the codes in the set storage space. The second target code refers to code to be read currently in the set storage space, and the second target code is a non-exception code. Further, two or more second target codes may be read from the set storage space of the chip. Unless otherwise specified, the following describes the case where one second target code is read. It is understandable that the processing for each of the two or more second target codes is the same as the processing for the one second object code.

For example, the chip includes a Central Processing Unit (CPU). Taking a case where the CPU of the chip is the execution body as an example, the CPU may read the first target code from the ROM of the chip, identify whether the first target code is the exception code, not execute the first target code in response to identifying that the first target code is the exception code, read the second object code from the set storage space of the chip and execute the second object code.

In an implementation, there is a correspondence between the first target code and the second target code.

In an implementation, the method further includes obtaining a mapping relationship between identifiers of first candidate codes and identifiers of second candidate codes, obtaining the identifier of the first target code, and determining the second target code from a plurality of second candidate codes based on the identifier of the first target code and the mapping relationship. For example, the second candidate code whose identifier having the mapping relationship with the identifier of the first target code may be used as the second target code. It is noteworthy that the first candidate codes are part or all of the codes in the ROM, the first target code is part of the first candidate codes, and the second candidate codes are part or all of the codes in the set storage space, and the second target code is part of the second candidate codes. In an example, the first target code is any of the first candidate codes and the second target code is any of the second candidate codes. Therefore, the second target code may be determined from the second candidate codes based on the identifier of the first target code and the mapping relationship between the identifiers of the first candidate codes and the identifiers of the second candidate codes.

In an implementation, before executing the second target code, the method further includes replacing the read first target code with the read second target code.

In an implementation, after the second target code is executed, the method further includes returning to execute an operation of reading the first target code from the ROM of the chip and subsequent operations until a set end condition is satisfied. It is noteworthy that the set end condition is not limited. For example, the set end condition may include that no first target code exists in the ROM, code execution in the ROM is finished, or the like. Therefore, after the second target code is executed, the code reading, the exception code identifying, the code executing and the like may be repeatedly performed. In other words, the codes included in the ROM each is used as the first target code and the methods according to the invention are applied to these first target codes in turn, to check whether the ROM includes an exception code.

With the method for controlling a chip according to embodiments of the invention, the first target code is read from the ROM of the chip, it is identified whether the first target code is the exception code, the first target is not executed and the second target code is read from a set storage space of the chip and is executed in response to identifying that the first target code is the exception code. Therefore, when the first target code read from the ROM of the chip is the exception code, the first target code is not executed, and it continuously read the second target code from the set storage space of the chip and execute the second target code. A problem that an abnormal operation of the chip caused by executing the first target code that is the exception code may be avoided, and a normal operation of the chip is guaranteed. Compared to the related art where the high cost and the long time consumption are caused since it requires to re-tape out the chip when the ROM of the chip includes the exception code, the solution of the invention does not need to re-tape out the chip, and thus has advantages of low cost and short time consumption.

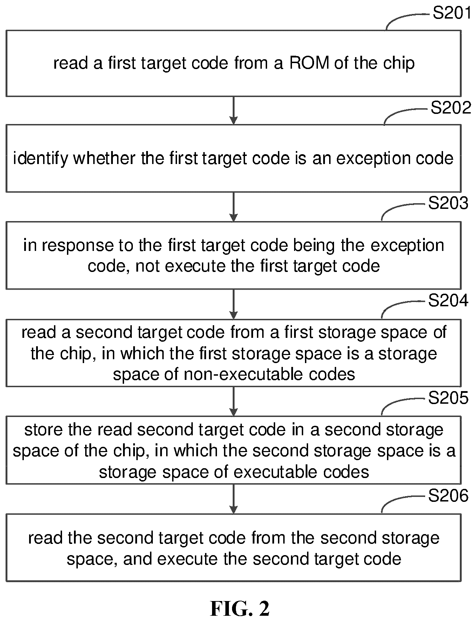

FIG. 2 is a flowchart illustrating a method for controlling a chip according to another embodiment. As illustrated in FIG. 2, a method for controlling a chip according to embodiments of the invention includes the following.

At S201, a first target code is read from an ROM of the chip.

At S202, it is identified whether the first target code is an exception code.

At S203, in response to the first target code being the exception code, the first target code is not executed.

For related content of steps S201 to S203, reference may be made to the foregoing embodiments, and details are not described herein again.

At S204, a second target code is read from a first storage space of the chip, in which the first storage space is a storage space of non-executable codes.

It is noteworthy that the chip includes the first storage space, and the first storage space has codes stored therein. The second target code is part or all of the codes in the first storage space. The first storage space is a storage space of non-executable codes. The first storage space is not limited. For example, the first storage space includes a one-time programmable memory, such as an electronic fuse (eFuse). Further, two or more second target codes may be read from the first storage space of the chip. Unless otherwise specified, the following describes the case where one second target code is read. It is understandable that the processing for each of the two or more second target codes is the same as the processing for the one second object code.

At S205, the read second target code is stored in a second storage space of the chip, in which the second storage space is a storage space of executable codes.

It is noteworthy that the chip includes the second storage space, and the second storage space has codes stored therein. The second target code is part or all of the codes in the second storage space. The second storage space is a storage space of executable codes. For example, the second storage space includes a Random Access Memory (RAM). In this embodiment, the set storage space includes the first storage space and the second storage space.

At S206, the second target code is read from the second storage space, and the second target code is executed.

For example, the chip includes a CPU. Taking a case that the CPU in the chip is the execution body as an example, the CPU may read the first target code from the ROM of the chip, withholds from executing the first target code in response to identifying that the first target code is the exception code, read the second target code from the first storage space of the chip, store the read second target code in the second storage space of the chip, read the second target code from the second storage space and execute the second target code. The first storage space is the storage space of the non-executable codes and the second storage space is the storage space of the executable codes.

With the method for controlling a chip according to embodiments of the invention, the second target code is read from the first storage space of the chip. The first storage space is the storage space of the non-executable codes. The read second target code is stored in the second storage space of the chip. The second storage space is the storage space of the executable codes. The second target code is read from the second storage space. Therefore, when the first target code read from the ROM of the chip is the exception code, it continuously to read the second target code from the storage space (i.e., the first storage space) of the non-executable codes, and the read second target code may be stored in the storage space (i.e., the second storage space) of the executable codes. The second target code may then be read from the storage space (i.e., the second storage space) of the executable codes to finish the reading of the second target code.

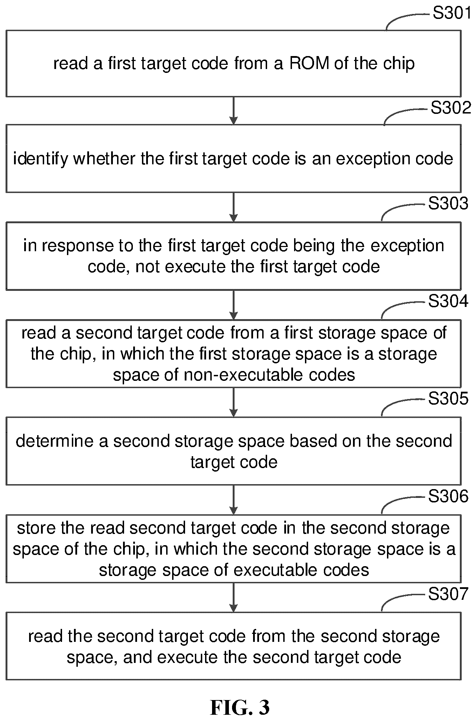

FIG. 3 is a flowchart illustrating a method for controlling a chip according to another embodiment. As illustrating in FIG. 3, the method for controlling a chip according to embodiments of the invention includes the following.

At S301, a first target code is read from an ROM of the chip.

At S302, it is identified whether the first target code is an exception code.

At S303, in response to identifying that the first target code is the exception code, the first target code is not executed.

At S304, a second target code is read from a first storage space of the chip, in which the first storage space is a storage space of non-executable codes.

For related content of the S301 to S304, reference may be made to the foregoing embodiments, and details are not described herein again.

At S305, a second storage space is determined based on the second target code.

In an implementation, determining the second storage space based on the second target code includes determining the second storage space based on a type to which the second target code belongs. It is understandable that different types of second target code may correspond to different second storage spaces.

In an implementation, when two or more second target codes are read from the first storage space of the chip, determining the second storage space based on the second target code includes determining the second storage space based on the quantity of the second target codes. For example, a mapping relationship between candidate intervals and candidate storage spaces may be obtained, a target interval in which the quantity of the second target codes is located is determined from the candidate intervals, and the second storage space is determined based on the target interval and the mapping relationship. For example, a candidate storage space having the mapping relationship with the target interval may be used as the second storage space. That is, when there are two or more second target codes, determining the second storage space based on the second target code includes determining the second storage space based on the quantity of the second target codes.

In an implementation, the method further includes: in response to a storage capacity occupied by the second target code being less than or equal to a set threshold, determining that the second target code is a first type of code, and in response to the storage capacity occupied by the second target code being greater than the set threshold, determining that the second target code is a second type of code. Therefore, the relationship between the storage capacity occupied by the second target code and the set threshold is considered to determine whether the second target code is the first type of code or the second type of code.

In some examples, determining the second storage space based on the second target code includes: in response to the second target code being the first type of code, using a third storage space as the second storage space, and in response to the second target code being the second type of code, using a fourth storage space as the second storage space. A storage capacity of the third storage space is less than a storage capacity of the fourth storage space. Therefore, when the second target code is the first type of code, the third storage space with a smaller storage capacity is used as the second storage space, and when the second target code is the second type of code, the fourth storage space with a larger storage capacity is used as the second storage space.

It is noteworthy that the chip includes a third storage space and a fourth storage space. The third storage space or the fourth storage space may be used as the second storage space (i.e., a set storage space). The third storage space and the fourth storage space are not limited, for example, the fourth storage space includes a RAM.

At S306, the read second target code is stored in the second storage space of the chip, in which the second storage space is a storage space of executable codes.

At S307, the second target code is read from the second storage space, and the second target code is executed.

For related content of the S306 to S307, reference may be made to the foregoing embodiments, and details are not described herein again.

With the method for controlling a chip according to embodiments of the invention, the second storage space is determined based on the second target code. Therefore, the second storage space may be determined by considering the second target code, which improves flexibility of the second storage space.

Based on any one of the foregoing embodiments, in response to the second target code being the second type of code, before the second type of code is read from the fourth storage space, the method further includes: reading a third target code from the first storage space, in which the third target code is used for instructing to read the second type of code from the fourth storage space, storing the read third target code in the third storage space, reading the third target code from the third storage space, and executing the third target code. Therefore, when the second target code is the second type of code, the third target code may be read from the first storage space, the read third target code is stored in the third storage space, the third target code is read from the third storage space, and the third target code is executed, so that the second type of code is subsequently read from the fourth storage space.

It is noteworthy that the third target code is part or all of codes in the first storage space or the third storage space.

Based on any one of foregoing embodiments, the method further includes: in response to the first target code being a non-exception code, executing the first target code. Therefore, when the first target code read from the ROM of the chip is a non- exception code, the first target code may be executed.

In some examples, after the first target code is executed, the method further includes: returning to execute operations of reading the first target code from the ROM of the chip and the subsequent operations until a set end condition is satisfied. It is noteworthy that the set end condition is not limited. For example, the set end condition may include that no first target code exists in the ROM, code execution in the ROM is finished, or the like. Therefore, after the first target code is executed, the code reading, the exception code identifying exception, the code executing or the like may be repeatedly performed.

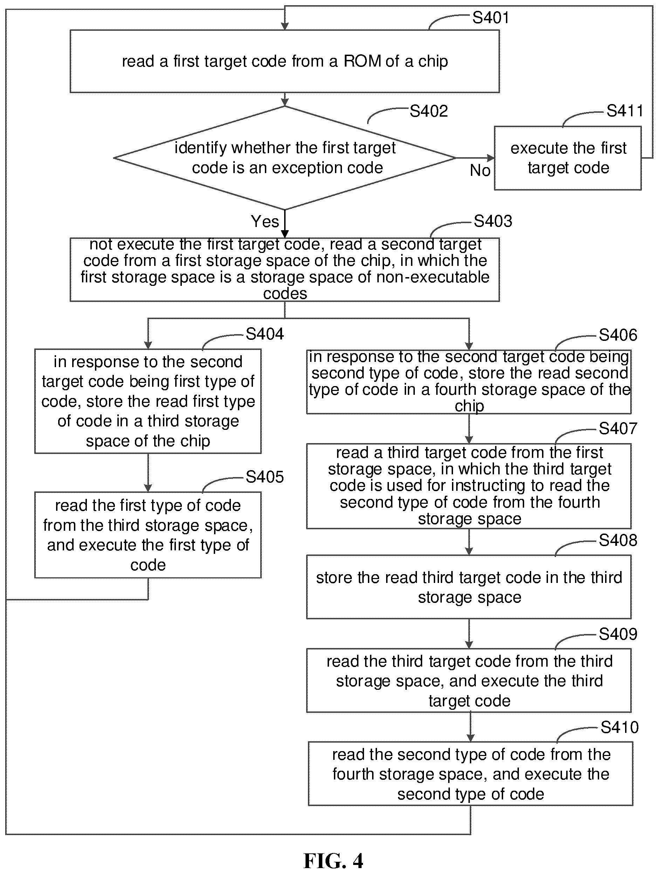

FIG. 4 is a flowchart illustrating a method for controlling a chip according to another embodiment. As illustrated in FIG. 4, the method for controlling a chip according to embodiments of the invention includes the following.

At S401, first target code is read from an ROM of the chip.

At S402, it is identified whether the first target code is an exception code.

In response to identifying that the first target code is the exception code, the S403 is performed; and in response to identifying that the first target code is not the exception code, the S411 is performed.

At S403, the first target code is not executed, and second target code is read from a first storage space of the chip, in which the first storage space is a storage space of non-executable codes.

At S404, in response to the second target code being a first type of code, the read first type of code is stored in a third storage space of the chip.

At S405, the first type of code is read from the third storage space, and the first type of code is executed.

At S406, in response to the second target code being second type of code, the read second type of code is stored in a fourth storage space of the chip.

At S407, a third target code is read from the first storage space, in which the third target code is used for instructing to read the second type of code from the fourth storage space.

At S408, the read third target code is stored in the third storage space.

At S409, the third target code is read from the third storage space, and the third target code is executed.

At S410, the second type of code is read from the fourth storage space, and the second type of code is executed.

At S411, the first target code is executed.

For related content of the S401 to S411, reference may be made to the foregoing embodiments, and details are not described herein again.

It is noteworthy that, after the first type of code is executed in the S405, the process may return to execute the S401 and subsequent operations until the set end condition is satisfied. Also, after the second type of code is executed in the S410, the process may return to execute the S401 and subsequent operations until the set end condition is satisfied. Also, after the first target code is executed in the S411, the process may return to execute the S401 and subsequent operations until the set end condition is satisfied

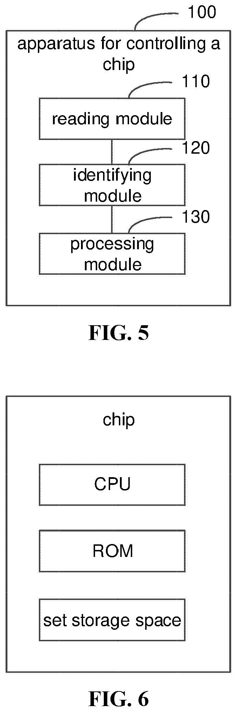

FIG. 5 is a block diagram illustrating an apparatus for controlling a chip according to an embodiment. As illustrated in FIG. 5, an apparatus 100 for controlling a chip according to embodiments of the invention includes a reading module 110, an identifying module 120, and a processing module 130.

The reading module 110 is configured to read a first target code from an ROM of the chip.

The identifying module 120 is configured to identify whether the first target code is an exception code.

The processing module 130 is configured to withhold from executing the first target code in response to identifying that the first target code is the exception code.

The processing module 130 is further configured to read a second target code from a set storage space of the chip, and execute the second target code.

In an embodiment of the invention, the identifying module 120 is further configured to: obtain a code library, in which each code in the code library is marked as the exception code; identify whether the first target code exists in the code library; in response to identifying that the first target code exists the code library, identify the first target code as the exception code; and in response to identifying that the first target code does not exist in the code library, identify the first target code as a non-exception code.

In an embodiment of the invention, the processing module 130 is further configured to: obtain a mapping relationship between identifiers of first candidate codes and identifiers of second candidate codes; obtain an identifier of the first target code; and determine the second target code from a plurality of second candidate codes based on the identifier of the first target code and the mapping relationship.

In an embodiment of the invention, the processing module 130 is further configured to: read the second target code from a first storage space of the chip, in which the first storage space is a storage space of non-executable codes; store the read second target code in a second storage space of the chip, in which the second storage space is a storage space of executable codes; and read the second target code from the second storage space.

In an embodiment of the invention, the processing module 130 is further configured to: determine the second storage space based on the second target code.

In an embodiment of the invention, the processing module 130 is further configured to: in response to a storage capacity occupied by the second target code being less than or equal to a set threshold, determine that the second target code is a first type of code; and in response to the storage capacity occupied by the second target code being greater than the set threshold, determine that the second target code is a second type of code.

In an embodiment of the invention, the processing module 130 is further configured to: in response to the second target code being the first type of code, use a third storage space as the second storage space; and in response to the second target code being the second type of code, use a fourth storage space as the second storage space, in which a storage capacity of the third storage space is less than a storage capacity of the fourth storage space.

In an embodiment of the invention, in response to the second target code being the second type of code, before the second type of code is read from the fourth storage space, the processing module 130 is further configured to: read a third target code from the first storage space, in which the third target code is used for instructing to read the second type of code from the fourth storage space; store the read third target code in the third storage space; read the third target code from the third storage space, and execute the third target code.

In an embodiment of the invention, the processing module 130 is further configured to: in response to the first target code being a non-exception code, execute the first target code.

For the apparatus in above embodiments, the specific manners in which the modules perform operations are described in detail in embodiments related to the methods, which are not be elaborated herein.

With the apparatus for controlling a chip according to embodiments of the invention, the first target code is read from the ROM of the chip, it is identified whether the first target code is the exception code, the first target is not executed and the second target code is read from a set storage space of the chip and is executed in response to identifying that the first target code is the exception code. Therefore, when the first target code read from the ROM of the chip is the exception code, the first target code is not executed, and it continuously read the second target code from the set storage space of the chip and execute the second target code. A problem that an abnormal operation of the chip caused by executing the first target code that is the exception code may be avoided, and a normal operation of the chip is guaranteed. Compared to the related art where the high cost and the long time consumption are caused since it requires to re-tape out the chip when the ROM of the chip includes the exception code, the solution of the invention does not need to re-tape out the chip, and thus has advantages of low cost and short time consumption.

FIG. 6 is a block diagram illustrating a chip according to an embodiment.

As illustrated in FIG. 6, the chip includes a CPU, a ROM, and a set storage space. The CPU is configured to perform steps of the methods for controlling a chip according to embodiments of the invention.

In an implementation, the set storage space includes: a first storage space which is a storage space of non-executable codes; and a second storage space which is a storage space of executable codes.

In an implementation, the first storage space includes a one-time programmable memory.

In an implementation, the second storage space includes a third storage space and a fourth storage space, in which a storage capacity of the third storage space is less than a storage capacity of the fourth storage space.

In an embodiment, the fourth storage space includes a RAM.

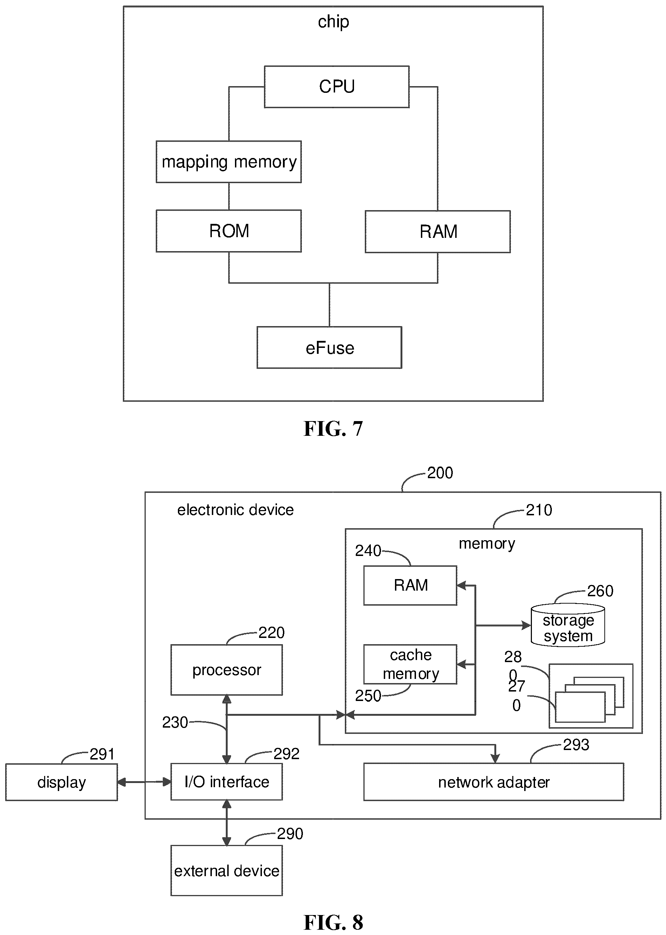

For example, as illustrated in FIG. 7, the chip includes a CPU, a ROM, an eFuse, a mapping memory, and a RAM. The mapping memory is connected to the CPU and the ROM, the ROM and the RAM are connected to the eFuse respectively, and the RAM is connected to the CPU. It is noteworthy that the eFuse is the first storage space, the mapping memory is the third storage space, and the RAM is the fourth storage space.

With the chip according to embodiments of the invention, the CPU in the chip may execute the methods for controlling chip as described above, including reading the first target code from the ROM of the chip, identifying whether the first target code is the exception code, withholding from executing the first target code in response to the first target code being the exception code, reading the second target code from the set storage space of the chip, and executing the second target code. Therefore, when the first target code read from the ROM of the chip is the exception code, the first target code is not executed, and it continuously read the second target code from the set storage space of the chip to execute the second target code. A problem that an abnormal operation of the chip caused by executing the first target code that is the exception code may be avoided, and a normal operation of the chip is guaranteed. Compared to the related art where the high cost and the long time consumption are caused since it requires to re-tape out the chip when the ROM of the chip includes the exception code, the solution of the invention does not need to re-tape out the chip, and thus has advantages of low cost and short time consumption.

FIG. 8 is a block diagram illustrating an electronic device according to an embodiment.

As illustrated in FIG. 8, the electronic device 200 includes:
a memory 210, a processor 220 and a bus 230 connecting different components (including the memory 210 and the processor 220). The memory 210 stores a computer program, and when the processor 220 executes the program, the methods for controlling a chip according to embodiments of the invention are performed.

The bus 230 represents one or more of several types of bus structures, including a memory bus or a local bus of a memory controller, a peripheral bus, a graphics acceleration port, a processor, or any one of a variety of bus architectures. For example, these architectures include but are not limited to Industry Standard Architecture (ISA) buses, Micro Channel Architecture (MAC) buses, enhanced ISA buses, Video Electronics Standards Association (VESA) local bus, and Peripheral Component Interconnect (PCI) bus.

The electronic device 200 typically includes a variety of electronic device readable media. Such media may be any available media that can be accessed by electronic device 200, including both volatile and non-volatile media, removable and non-removable media.

The memory 210 may also include a computer system readable medium in the form of volatile memory, such as an RAM 240 and/or a cache memory 250. The electronic device 200 may further include other removable/non-removable, volatile/non-volatile computer system storage media. By way of example only, a storage system 260 may be used to read and write the non-removable or non-volatile magnetic media (not shown in FIG. 8, commonly referred to as "a hard disk drive"). Although not shown in FIG. 8, a disk drive for reading from and writing to a removable non-volatile magnetic disk (e.g., "a floppy disk"), and an optical disk drive for reading from and writing to a removable non-volatile optical disk (e.g., a Compact Disc ROM (CD-ROM), a Digital Versatile Disc ROM (DVD-ROM), or other optical media) may be provided. In such cases, each drive may be connected to a bus 230 through one or more data media interfaces. The memory 210 may include at least one program product having a set (e.g., at least one) of program modules configured to perform functions of embodiments of the invention.

A program/utility 280 having a set of (at least one) program modules 270 may be stored, for example, in memory 210. Such program modules 270 includes, but are not limited to, an operating system, one or more applications, other program modules, and program data, each or some combinations of these examples may include an implementation of a network environment. The program modules 270 generally perform the functions and/or methods of the embodiments of the invention.

The electronic device 200 may also communicate with one or more external devices 290 (e.g., a keyboard, a pointing device, a display 291, and the like), may also communicate with one or more devices that enable a user to interact with the electronic device 200, and/or any device (e.g., a network card, a modem, and the like) that enables the electronic device 200 to communicate with one or more other computing devices. Such communication may occur via an input/output (I/O) interface 292. In addition, the electronic device 200 may further communicate with one or more networks (e.g., a Local Area Network (LAN), a Wide Area Network (WAN), and/or a public network, such as Internet) through a network adapter 293. As shown in FIG. 8, the network adapter 293 communicates with other modules of the electronic device 200 through the bus 230. It should be understood that although not shown in the figure, other hardware and/or software modules may be used in combination with the electronic device 200, including but not limited to: microcode, a device drive, a redundancy processing unit, an external disk drive array, a Redundancy Arrays of Independent Disk (RAID) system, a tape drive, a data backup storage system, and the like.

The processor 220 executes various functional applications and data processing by running programs stored in the memory 210.

It should be noted that, the implementation process and technical principle of the electronic device in the embodiment refer to the foregoing descriptions of the method for controlling a chip in the embodiments of the invention.

With the electronic device according to embodiments of the invention, the methods for controlling chip as described above are performed, including reading the first target code from the ROM of the chip, identifying whether the first target code is the exception code, withholding from executing the first target code in response to the first target code being the exception code, reading the second target code from the set storage space of the chip, and executing the second target code. Therefore, when the first target code read from the ROM of the chip is the exception code, the first target code is not executed, and it continuously read the second target code from the set storage space of the chip to execute the second target code. A problem that an abnormal operation of the chip caused by executing the first target code that is the exception code may be avoided, and a normal operation of the chip is guaranteed. Compared to the related art where the high cost and the long time consumption are caused since it requires to re-tape out the chip when the ROM of the chip includes the exception code, the solution of the invention does not need to re-tape out the chip, and thus has advantages of low cost and short time consumption.

To implement foregoing embodiments, the invention further provides a computer-readable storage medium having computer program instructions stored thereon, in which the program instructions, when executed by a processor, perform the steps of the methods for controlling a chip according to the invention.

In some embodiments, the computer-readable storage medium may be a ROM, a RAM, a CD-ROM, a magnetic tape, a floppy disk, an optical data storage device, or the like.

To implement foregoing embodiments, the invention further provides a computer program product, including a computer program, in which the computer program, when executed by a processor of an electronic device, performs the foregoing methods for controlling a chip.

Other embodiments of the invention will be apparent to those skilled in the art from consideration of the specification and practice of the invention disclosed herein. The invention is intended to cover any variations, uses, or adaptations of the invention following the general principles thereof and including such departures from the invention as come within known or customary practice in the art. It is intended that the specification and embodiments be considered as examples only, with the true scope of the invention being indicated by the following claims.

It is understandable that the invention is not limited to the precise structures that have been described above and shown in the accompanying drawings, and various modifications and changes may be made without departing from the scope thereof. The scope of the invention is limited only by the appended claims.

## Claims

1. A method for controlling a chip, comprising:
reading (S101; S201; S301; S401) a first target code from a Read-Only Memory, ROM, of the chip;
identifying (S 102; S202; S302; S402) whether the first target code is an exception code;
not executing (S103; S203; S303; S403) the first target code in response to the first target code being the exception code; and
reading (S104) a second target code from a set storage space of the chip, and executing the second target code.

2. The method of claim 1, wherein identifying (S102) whether the first target code is the exception code comprises:
obtaining a code library, wherein each code in the code library is marked as the exception code;
identifying whether the first target code exists in the code library;
identifying that the first target code is the exception code in response to the first target code existing in the code library; and
identifying that the first target code is a non-exception code in response to the first target code not existing in the code library.

3. The method of claim 1 or 2, further comprising:
obtaining a mapping relationship between identifiers of first candidate codes and identifiers of second candidate codes;
obtaining an identifier of the first target code; and
determining the second target code from a plurality of second candidate codes based on the identifier of the first target code and the mapping relationship.

4. The method of any one of claims 1 to 3, wherein reading (S104) the second target code from the set storage space of the chip comprises:
reading (S204; S304; S403) the second target code from a first storage space of the chip, wherein the first storage space is a storage space of non-executable codes;
storing (S205; S306) the read second target code in a second storage space of the chip, wherein the second storage space is a storage space of executable codes; and
reading (S206; S307) the second target code from the second storage space.

5. The method of claim 4, further comprising:
determining (S305) the second storage space based on the second target code.

6. The method of claim 5, further comprising:
determining that the second target code is a first type of code in response to a storage capacity occupied by the second target code being less than or equal to a set threshold; and
determining that the second target code is a second type of code in response to the storage capacity occupied by the second target code being greater than the set threshold.

7. The method of claim 6, wherein determining the second storage space based on the second target code comprises:
using a third storage space as the second storage space in response to the second target code being the first type of code; and
using a fourth storage space as the second storage space in response to the second target code being the second type of code;
wherein a storage capacity of the third storage space is less than a storage capacity of the fourth storage space.

8. The method of claim 7, wherein in response to the second target code being the second type of code, before reading the second type of code from the fourth storage space, the method further comprises:
reading (S407) a third target code from the first storage space, wherein the third target code is used for instructing to read the second type of code from the fourth storage space;
storing (S408) the read third target code in the third storage space; and
reading (S409) the third target code from the third storage space, and executing the third target code.

9. The method of any one of claims 1 to 8, further comprising:
executing the first target code in response to the first target code being a non-exception code.

10. An apparatus (100) for controlling a chip, comprising:
a reading module (110), configured to read a first target code from a Read-Only Memory, ROM, of the chip;
an identifying module (120), configured to identify whether the first target code is an exception code; and
a processing module (130), configured to: not execute the first target code in response to the first target code being the exception code;
wherein the processing unit (130) is further configured to read the second target code from a set storage space of the chip, and execute the second target code.

11. A chip, comprising:
a central processing unit, CPU, a Read-Only Memory, ROM, and a set storage space;
wherein the CPU is configured to perform the steps of the method according to any one of claims 1 to 9.

12. The chip of claim 11, wherein the set storage space comprises:
a first storage space, wherein the first storage space is a storage space of non-executable codes; and
a second storage space, wherein the second storage space is a storage space of executable codes.

13. The chip of claim 12, wherein the first storage space comprises a one-time programmable memory.

14. The chip of claim 12 or 13, wherein the second storage space comprises:
a third storage space and a fourth storage space, wherein a storage capacity of the third storage space is less than a storage capacity of the fourth storage space.

15. The chip of claim 14, wherein the fourth storage space comprises a Random Access Memory, RAM.
